# EUROPEAN PATENT APPLICATION

(11) **EP 2 229 020 A1**
(43) Date of publication of application: **15.09.2010**
(21) Application number: 09003704.5
(22) Date of filing: 13.03.2009
(51) Int. Cl.: H04W 16/04, H04W 24/02

(54) **Method and device for data processing in a radio network**

(71) Applicant: Nokia Siemens Networks OY, 02610 Espoo (FI)
(72) Inventor: Luo, Jijun, 81549 München (DE); Rehfuess, Ulrich, 81475 München (DE); Goldberg, Martin, 86926 Greifenberg (DE)
(74) Representative: Bruglachner, Thomas E.

(57) **Abstract**

A method and a device for data processing in a radio network are provided, wherein the radio network comprises at least one TDD resource, and wherein at least two frequency bands of at least two entities of the at least one TDD resource are combined.

## Description

The invention relates to a method and to a device for data processing in a radio network.

According to 3GPP TS 36.104 V8.4.0 (2008-12), "Evolved Universal Terrestrial Radio Access (E-UTRA); Base Station (BS) radio transmission and reception (Release 8)", operating bands for uplink and downlink are defined. An E-UTRA operating band "33" allocates a frequency range from 1900MHz to 1920MHz for the uplink operating band as well as for the downlink operating band. In this band, time division duplex (TDD) can be utilized.

This TDD spectrum is currently not used and thus a significant waste of resources.

The **problem** to be solved is to overcome the disadvantages stated above and in particular to efficiently use a TDD band for broadcasting services, e.g., for MBMS in 3GPP.

This problem is solved according to the features of the independent claims. Further embodiments result from the depending claims.

In order to overcome this problem, a method for data processing in a network is provided,
- wherein the radio network comprises at least one TDD resource,
- wherein at least two frequency bands of at least two entities of the at least one TDD resource are combined.

Hence, this approach allows to efficiently utilize the TDD resource available in a wireless network. This can efficiently be done in combination with (e.g., existing) FDD and/or resources and adjacent to such FDD and/or TDD resources.

It is noted that said resource is also referred to as spectrum, range of bandwidth or band.

The at least two frequency bands may be utilized for uplink traffic, for downlink traffic or for uplink and downlink traffic.

According to an embodiment, the radio network comprises at least one adjacent FDD resource and/or at least one additional adjacent TDD resource.

Such FDD resource and/or TDD resource may be in the vicinity or adjacent to the at least one TDD resource.

In an embodiment, the entity comprises or is associated with at least one of the following
- an operator;
- a service.

Hence, the approach provided allows for a combination of resources of various operators.

In another embodiment, a guard band is provided between at least two TDD resources and/or between the at least one TDD resource and at least one FDD resource.

Such guard band avoids any interference between FDD traffic and TDD traffic, in particular if each such traffic has a different direction (i.e., UL/DL).

In a further embodiment, said guard band is provided between a FDD UL resource and the TDD resource.

In a next embodiment, a TDD UL band is located in the guard band.
Hence, the guard band may be utilized for uplink traffic as the adjacent FDD band also comprises UL traffic. This bears the advantage that there is an additional resource for conveying uplink traffic and the relationship between UL and DL traffic conveyed via the TDD band can be adjusted according to particular requirements of the (several) entities (operators).

It is also an embodiment that the at least two frequency bands of the at least two entities are synchronized, in particular by the entities selecting the same configuration mode.

Pursuant to another embodiment, the at least one TDD resource comprises an uplink resource and a downlink resource.

According to an embodiment, each of the at least two frequency bands are permanently assigned to the entity.

In particular, the entity may have bought and thus "owns" a frequency band.

According to another embodiment, the radio network is a 3GPP network, in particular an evolved universal terrestrial radio network.

In yet another embodiment, the at least one TDD resource is used for an MBMS and/or for a unicast service.

The resource used for MBMS and for unicast service may be swapped depending on the actual deployment scenario, in particular based on a transmission power assessment (regarding the MBMS and/or the unicast service) or based on a geographical location of either one (or both) of the MBMS or unicast base station(s).

According to a next embodiment, the unicast service is conveyed via a TDD resource close to the FDD band.
Pursuant to yet an embodiment,
- a control unit and an entity's O&M system agree on a configuration mode;
- the control unit assigns a license based on the configuration mode to the entity;
- the entity triggers the O&M system to configure a base station depending on the configuration mode.

Hence, the configuration mode may be negotiated between the control unit and the O&M system or it may be set by either one and the respective other component may be informed accordingly.

It is also an embodiment that the base station is synchronized with a clock server.

This efficiently avoids any interference with other entities.

The problem stated above is also solved by a device comprising a and/or being associated with a processor unit and/or a hard-wired circuit and/or a logic device that is arranged such that the method as described herein is executable thereon.

According to an embodiment, the device is a communication device, in particular a or being associated with a control unit and/or a base station.

The problem stated supra is further solved by a communication system comprising the device as described herein.

Embodiments of the invention are shown and illustrated in the following figures:
- Fig.1: shows a coordinated TDD band utilization for three operators, wherein each operator has a portion of the TDD band, i.e. is provided with a dedicated resource;
- Fig.2: shows an exemplary UL/DL configuration "number 5" for MBMS;
- Fig.3: shows a symbolic diagram comprising components to visualize an automatic configuration mode for TDD MBMS in a multi-operator scenario;
- Fig.4: shows a time-frequency diagram comprising a TDD band from 1900MHz to 1920MHz with an adjacent FDD UL band starting at 1920MHz, wherein a guard band is defined between the TDD band and the FDD UL band, the guard band ranges from 1915MHz to 1920MHz, wherein DL and UL traffic of several operators is combined, respec- tively;
- Fig.5: shows a time-frequency diagram comprising a TDD band from 1900MHz to 1920MHz with an adjacent FDD UL band starting at 1920MHz, wherein a resource block is de- picted within the guard band that could be used as an additional UL slot for conveying UL traffic;
- Fig.6: shows a time-frequency diagram comprising a TDD band from 1900MHz to 1920MHz with an adjacent FDD UL band starting at 1920MHz, wherein a hybrid operation mode is used to combine multicast and unicast services;
- Fig.7: shows a time-frequency diagram depicting a hybrid op- eration mode with a high capacity MBMS and a unicast service.

The approach provided may
(a) allow introducing MBMS to an existing UMTS TDD band, e.g. 1900-1920, in particular using TD LTE;
(b) be utilized for coordinating spectrum usage between operators. In particular, multiple operator IDs may be conveyed via a broadcasting channel;
(c) allow for a single guard band between a FDD UL band, e.g., between the TDD band and the FDD UL band;
(d) enable the TDD band utilizing an UL sub-band that could convey feedback information towards the network;
(e) enable an automatic mode of operation, e.g., a signaling between a control unit and at least one operator;
(f) enable a hybrid operation mode comprising multicast and unicast services.

This approach in particular allows for an available TDD band to be used for MBMS in a multi-operator scenario.

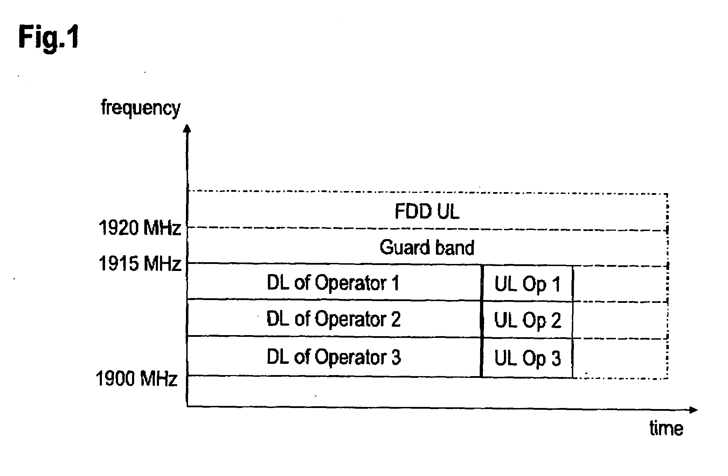

**Fig.1** shows a coordinated TDD band utilization for three operators, wherein each operator has a portion of the TDD band, i.e. is provided with a dedicated resource. In order to avoid interference, all operators utilize the same pattern for DL traffic and for UL traffic, i.e., the operators at the same time convey DL traffic (and at the same time handle UL traffic). Hence, in the TDD band, DL and UL traffic are synchronized for all the operators. In other words, in order to avoid interference, operators choose the same UL/DL configuration mode and the transmissions are synchronized (with regard to UL/DL traffic). If there is no UL traffic or signaling required, no time synchronization among the operators is needed (the same applies if there is no DL traffic and only UL traffic).

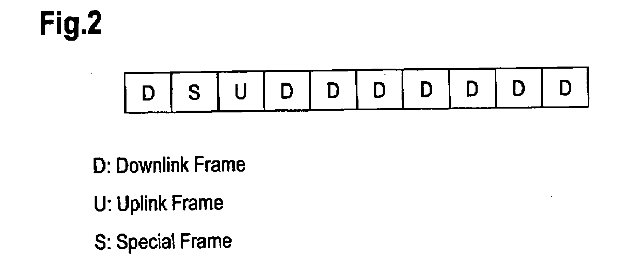

In an exemplary scenario for LTE TDD, a "number 5" configuration as defined for LTE TDD by 3GPP (3GPP TS 36.211 V8.5.0 (2008-12), Evolved Universal Terrestrial Radio Access (E-UTRA); Physical Channels and Modulation (Release 8), Table 4.2-2, "Uplink-Downlink Configurations"), see **Fig.2**, can be used. However, this is only one exemplary configuration, others may be applicable as well.

### Automatic Operation mode:

An automatic operation mode is suggested for an operator, in particular for each of several operators (identified as "operator n"), that wants to deploy MBMS using TDD.

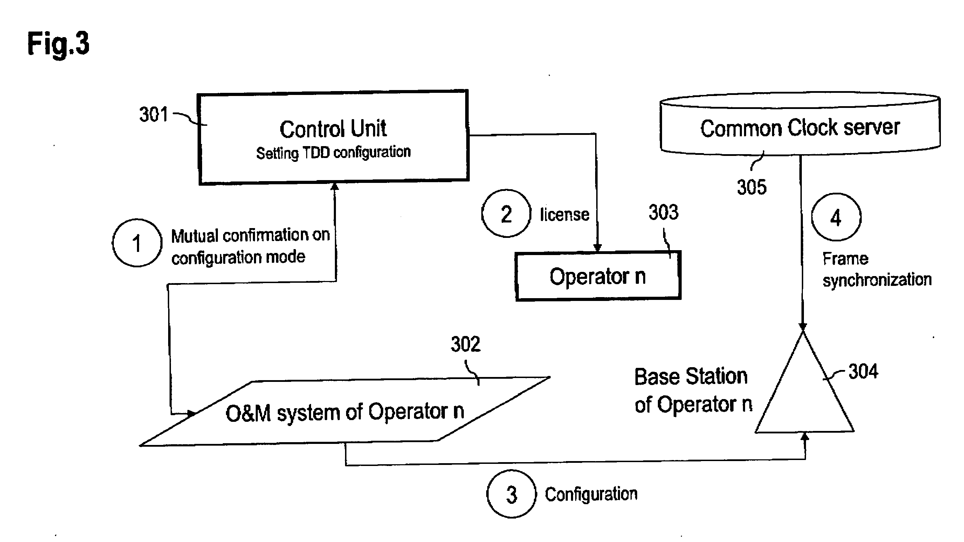

**Fig.3** shows a symbolic diagram comprising components to visualize an automatic configuration mode for TDD MBMS in a multi-operator scenario. The associated mechanism may comprise at least a portion of the following steps:
(1) An O&M system 302 of the operator n mutually agrees with a control unit 301 on a configuration mode, i.e., on a RAT (to be) selected (e.g., an eUTRAN TDD) and its configuration.
(2) After the matching of the RAT selected and its configuration that has been agreed upon and after an authentication and/or an authority test, the control unit 301 assigns a license to the operator n 303.
(3) The operator n 303 triggers the O&M system 302 to configure a base station 304 of the operator n depending on the configuration mode.
(4) The base station 304 synchronizes with a common clock server 305 in order not to interfere with other operators.

### Multi-operator spectrum and network sharing mode:

Alternatively or in addition, the TDD band may be associated with even more operators' services. For example, the operators may be separated on a logical level. On a physical level, however, the operators may utilize the same network and the same bundle of frequency resources.

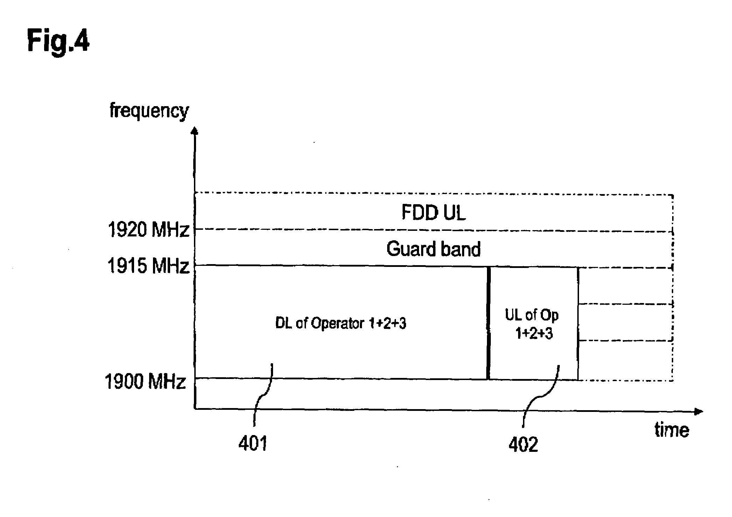

**Fig.4** shows a time-frequency diagram comprising a TDD band from 1900MHz to 1920MHz with an adjacent FDD UL band starting at 1920MHz, wherein a guard band is defined between the TDD band and the FDD UL band, the guard band ranges from 1915MHz to 1920MHz. The TDD band utilized in this example ranges from 1900MHz to 1915MHz, wherein a block 401 is used for DL traffic of several operators, here referred to as operators 1 to 3, and a block 402 is used for UL traffic of several operators (in the example of Fig.4, the same operators 1 to 3).

This approach bears the advantage that the scalable bandwidth feature of LTE TDD can be utilized, i.e., in contrast to the solution shown in Fig.1, the base band bandwidth for each transmission is extended from 5MHz (for each operator according to Fig.1) to 15MHz.

A broadcasting information may carry operators' information. The resource allocated to difference between the operators can be statically allocated and indicated by the common channel.

Information sent by the operator n may be ciphered according to a ciphering key previously agreed on between the subscriber and the operator.

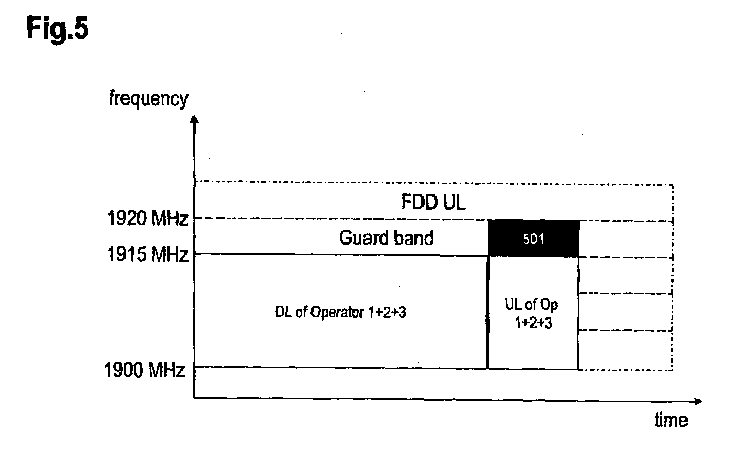

A paring of UL resources is not limited to the same sub-band as shown in **Fig.5.** Fig.5 shows a time-frequency diagram comprising a TDD band from 1900MHz to 1920MHz with an adjacent FDD UL band starting at 1920MHz according to Fig.4. However, in contrast to Fig.4, a resource block 501 is depicted in Fig.5 that could be used as an additional UL slot for conveying UL traffic. The resource block 501 does not lead to interference with the FDD UL band, because both, the FDD UL band and the resource block 501, convey traffic in the same direction (i.e. UL).

### Hybrid operation mode:

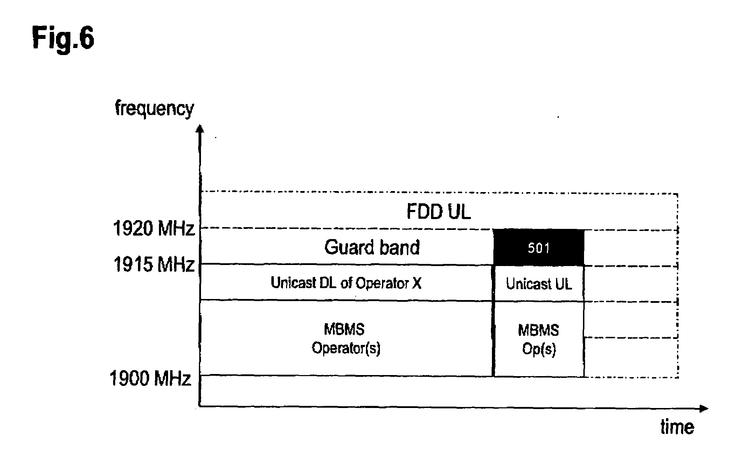

**Fig.6** shows a time-frequency diagram comprising a TDD band from 1900MHz to 1920MHz with an adjacent FDD UL band starting at 1920MHz according to Fig.5. However, in contrast to Fig.5, a block 601 is used as a resource for unicast service DL of an operator (among several operators) and a block 602 is used as a resource for MBMS DL of at least one operator. A block 603 is used as a resource for MBMS UL of at least one operator and a block 604 is used as a resource for a unicast service UL (e.g., feedback channel towards the operator utilizing block 601). The resource block 501 may be part of the block 604.

Hence, Fig.6 provides a mixture of unicast services and MBMS, wherein both types of services use LTE TDD. Advantageously, the unicast service may be conveyed via a band in the vicinity to the FDD band. This configuration in particular comprises the following advantages:
- The MBMS can transmit at a higher power due to a bigger guard band distance to the FDD UL band.
- The unicast service has an increased UL resource (both blocks 604 and 501) and does not require any spectrum aggregation at the terminal or at the base station.

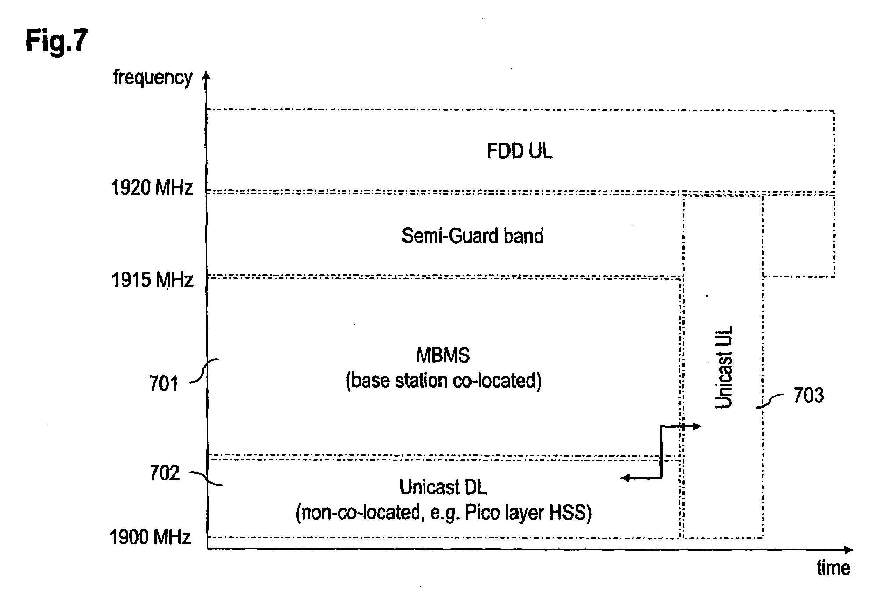

**Fig.7** shows a time-frequency diagram depicting a hybrid operation mode with a high capacity MBMS. Hence, a TDD band from 1900MHz to 1920MHz with an adjacent FDD UL band starting at 1920MHz is shown, wherein a semi-guard band is provided between the TDD band and the FDD UL band. A block 701 is used for conveying MBMS traffic, wherein a block 702 is utilized for conveying unicast DL traffic and a block 703 conveys unicast UL data. Said block 703 occupies a portion of the semi-guard band.

The utilization of the semi-guard band results in an optimized balance between the DL/UL traffic, i.e. additional UL traffic can be conveyed in the portion of said semi-guard band. The utilization of the TDD band allows for an improved coverage in particular in a single frequency network (SFN). For example, the block 701 may be provided by the same base station as is the FDD UL band (collocated base station). The unicast DL traffic conveyed in block 702 is associated with the unicast UL traffic of block 702. By extending block 703 into the semi-guard band, the available resource utilized for uplink traffic is increased. The resource of block 702 can be provided by a non-collocated base station, e.g., a pico layer.

Based on a deployment scenario, e.g., on a transmission power value of the base station both in the unicast service and in the MBMS, on a geographical location of the MBMS and unicast base stations, etc., block 701 and block 702 can be swapped, e.g., MBMS may then use the lower sub-band and the unicast service may use the higher sub-band between the MBMS and the guard band.

By supplying the unicast DL traffic via block 702 it is well isolated from the FDD UL traffic.

### Further Advantages:

The approach provided in particular comprises the following advantages:
(a) The operators can efficiently use the spectrum acquired, hence the approach increases the operators' acceptance regarding their now efficiently utilized spectrum.
(b) Any interference is efficiently reduced or avoided due to the separation between UL and DL resources. This is efficiently achieved by synchronizing the UL and/or DL traffic.
(c) The TDD spectrum can be efficiently used.
(d) Operators can be deleted from / added to the combined spectrum with a high degree of flexibility.
(e) UL feedback resources can be integrated in a highly flexible manner.
(f) A time-to-market can be drastically reduced due to standardized TDD systems.
(g) Aggregating frequency form several operators allows for a significant increase of the overall resource that can be flexibly utilized by multiplexing portions of resources to said several operators.

### List of Abbreviations:

- 3GPP: Third Generation Partnership Project
- BS: Base Station
- DL: downlink
- E-UTRA: Evolved Universal Terrestrial Radio Access
- FDD: Frequency Division Duplex
- ID: Identifier or Identification
- IMB: Integrated Mobile Broadcasting
- LTE: Long Term Evolution
- MBMS: Multimedia Broadcasting Multicasting Services
- O&M: Operation and Maintenance
- RAT: Radio Access Technology
- TD: Time Division
- TDD: Time Division Duplex
- UL: uplink

## Claims

1. Method for data processing in a radio network,
- wherein the radio network comprises at least one TDD resource,
- wherein at least two frequency bands of at least two entities of the at least one TDD resource are combined.

2. The method according to claim 1, wherein the radio network comprises at least one adjacent FDD resource and/or at least one additional adjacent TDD resource.

3. The method according to any of the preceding claims,
wherein the entity comprises or is associated with at least one of the following
- an operator;
- a service.

4. The method according to any of the preceding claims,
wherein a guard band is provided between at least two TDD resources and/or between the at least one TDD resource and at least one FDD resource.

5. The method according to claim 4, wherein said guard band is provided between a FDD UL resource and the TDD resource, in particular wherein a TDD UL band is located at least partially in the guard band.

6. The method according to any of the preceding claims,
wherein the at least two frequency bands of the at least two entities are synchronized, in particular by the entities selecting the same configuration mode.

7. The method according to any of the preceding claims,
wherein the at least one TDD resource comprises an uplink resource and a downlink resource.

8. The method according to any of the preceding claims,
wherein each of the at least two frequency bands are permanently assigned to the entity.

9. The method according to any of the preceding claims,
wherein the radio network is a 3GPP network, in particular an evolved universal terrestrial radio network.

10. The method according to any of the preceding claims,
wherein the at least one TDD resource is used for an MBMS and/or for a unicast service.

11. The method according to claim 10, wherein the unicast service is conveyed via a TDD resource close to the FDD band.

12. The method according to any of the preceding claims,
- wherein a control unit and an entity's O&M system agree on a configuration mode;
- wherein the control unit assigns a license based on the configuration mode to the entity;
- wherein the entity triggers the O&M system to configure a base station depending on the configuration mode.

13. The method according to claim 12, wherein the base station is synchronized with a clock server.

14. A device comprising a and/or being associated with a processor unit and/or a hard-wired circuit and/or a logic device that is arranged such that the method according to any of the preceding claims is executable thereon.

15. The device according to claim 14, wherein said device is a communication device, in particular a or being associated with a control unit and/or a base station.
